# EUROPEAN PATENT APPLICATION

(11) **EP 2 549 193 A1**
(43) Date of publication of application: **23.01.2013**
(21) Application number: 11755612.6
(22) Date of filing: 25.01.2011
(51) Int. Cl.: F24F 3/06, F24H 4/00, F25B 30/02

(54) **MULTIFUNCTIONAL AIR-CONDITIONING AND HOT-WATER SYSTEM**

(30) Priority: 13.03.2010 CN 201010128392
(71) Applicant: Coolpoint Energy-Saving Equipment (Shenzhen) Co., Ltd., Guangdong 518083 (CN)
(72) Inventor: GUO, Lihua, Zhongshan Guangdong 528400 (CN)
(74) Representative: Kiddle, Simon John
(86) International application number: PCT/CN2011/000118
(87) International publication number: WO 2011/113295

(57) **Abstract**

Disclosed is a multifunctional air-conditioning and hot-water system which comprises a special three-way valve (2), a four-way valve (3), an outdoor heat exchanger (5), an indoor heat exchanger (6), a multifunctional throttling channel conversion device (7) and a pressure relief device (8). An inlet of the special three-way valve (2) is connected with an gas outlet of a compressor (1), one outlet of the special three-way valve (2) is connected with an inlet of a heat-exchange pipeline (41) of a water-heat exchanger (4), the other outlet of the special three-way valve (2) is connected with an inlet of the four-way valve (3), and an additional channel is connected with an inlet of the pressure relief device (8). A water output controller (110) linked with the special three-way valve (2) is disposed at the hot-water outlet end of the water-heat exchanger (4). Three outlets of the four-way valve (3) are connected with a heat exchange pipeline (51) of the outdoor heat exchanger (5), a heat exchange pipeline (61) of the indoor heat exchanger (6) and a return gas inlet of the compressor (1) respectively. The outlet of the heat exchange pipeline (41) of the water-heat exchanger (4), the other end of the heat exchange pipeline (51) of the outdoor heat exchanger (5) and the other end of the heat exchange pipeline (61) of the indoor heat exchanger (6) are connected with three ports of the multifunctional throttling channel conversion device (7) respectively.

## Description

### TECHINICAL FIELD

The present invention relates to a multifunctional air-conditioning and hot-water system that is able to conduct cooling, heating and/or producing hot-water solely or simultaneously.

### BACKGROUND ART

In recent years, air-conditioning equipments and hot-water supply equipments are wildly used in all walks of life. However, most of the existing equipments only possess one or two functions, i.e., either warm air/cold air supply or hot-water supply. With the developments of science and technology as well as the increasing improvements of environmental protection consciousness, people have increasingly high requirements for air-conditioning and hot-water systems. Moreover, a system that possesses multiple functions in one, can save energy and reduce emission, and can utilize waste energy has already been the trend of future technology development. Therefore, an improved multifunctional integrated control system is desirable. For this purpose, the Applicant has developed an improved air-conditioning and hot-water system that can realize at least six functions with only one set of equipments, including cooling solely, heating solely, producing hot-water solely, producing hot-water while cooling, producing hot-water preferentially in a heating mode, and producing chilled water together with hot-water and so on.

### SUMMARY OF THE INVENTION

The present invention is aimed at providing an air-conditioning and hot-water system to overcome the shortcomings of prior art. The air-conditioning and hot-water system is a multifunctional one that has a rational construction and is easy to use, has a long lifetime and can meet the requirements for saving energy and reducing emission.

To solve the existing technical problems above, the present invention employs the following technical solutions:

A multifunctional air-conditioning and hot-water system, which comprises a compressor, a special three-way valve, a four-way valve, a water-heat exchanger, an outdoor heat exchanger, an indoor heat exchanger, a multifunctional throttling channel conversion device and a pressure relief device, wherein a water inlet and a water outlet of the water-heat exchanger are connected with an outside cold-water supply end and an outside hot-water receiving end respectively; an inlet of the special three-way valve is connected with a gas outlet of the compressor, one outlet of the special three-way valve is connected with an inlet of a heat-exchange pipeline of the water-heat exchanger, the other outlet of the special three-way valve is connected with an inlet of the four-way valve, and an additional channel of the special three-way valve is connected with an inlet of the pressure relief device; a water output controller interlocked with the special three-way valve is disposed at the hot-water outlet end of the water-heat exchanger; three outlets of the four-way valve are connected with a heat-exchange pipeline of the outdoor heat exchanger, a heat-exchange pipeline of the indoor heat exchanger and a return gas inlet of the compressor respectively; an outlet of the heat-exchange pipeline of the water-heat exchanger, the other end of the heat-exchange pipeline of the outdoor heat exchanger and the other end of the heat-exchange pipeline of the indoor heat exchanger are connected with three ports of the multifunctional throttling channel conversion device respectively; an outlet of the pressure relief device leads to the return gas inlet of the compressor.

In an improved embodiment of the multifunctional air-conditioning and hot-water system above, the multifunctional throttling channel conversion device comprises five check valves and a throttling apparatus, wherein four check valves are bridged into bridge channels, two diagonal points of the bridge channels are connected with the other end of the heat-exchange pipeline of the outdoor heat exchanger and the other end of the heat-exchange pipeline of the indoor heat exchanger respectively, the throttling apparatus is connected between the other two points of the bridge channels; the remaining one check valve is connected between the outlet of the heat-exchange pipeline of the water-heat exchanger and two opposite check valves of the bridge channels.

In an improved embodiment of the multifunctional air-conditioning and hot-water system above, the multifunctional throttling channel conversion device further comprises a liquid storage and a filter, the liquid storage and the filter are disposed between an inlet of the throttling apparatus and the two opposite check valves of the bridge channels.

In an improved embodiment of the multifunctional air-conditioning and hot-water system above, the multifunctional throttling channel conversion device further comprises a chilled water electromagnetic valve; the chilled water electromagnetic valve is disposed on a channel of check valve of the bridge channels, wherein the channel of the check valve is directed to the indoor heat exchanger.

In an improved embodiment of the multifunctional air-conditioning and hot-water system above, a condensing pressure adjusting valve is disposed at the water inlet of the water-heat exchanger, and the opening degree of the condensing pressure adjusting valve is controlled by high pressure gas at the gas outlet of the compressor.

Compared with prior art, the beneficial effects of the present invention lie in that: 1) since the present invention performs cycling of a heat pump by a certain special three-way valve and a four-way valve as well as a multifunctional throttling channel conversion device and performs heat exchanging with one, two or three of a water-heat exchanger, an outdoor heat exchanger, and an indoor heat exchanger during the whole cycling, one of six processes can be implemented, including cooling solely, heating solely, producing hot-water solely, producing hot-water while cooling, producing hot-water preferentially in a heating mode, and producing chilled water together with hot-water. It can be seen that, the present invention can realize six functions with simply system connections and a simple control. Therefore, the present invention can provide a multifunctional system which has a rational construction and can also meet the requirements for saving energy and reducing emission so as to satisfy lots of different needs; 2) due to a pressure relief device, it can be ensured that during the conversion of the system the pressures therein are kept balanced with a rapid conversion speed. The residual high pressure produced during the conversion of the system can be relieved to a low pressure end rapidly through the pressure relief device to achieve fast and flexible conversion of the system, and to make the operation of the system stable and balanced. Therefore, the system has sufficient safety precautions and an improved lifetime; and 3) since the multifunctional throttling channel conversion device is a mechanical structure and each port of which connects with two pipelines, and one of the two pipelines is set to OFF by mechanical means (or by high pressure) while the other pipeline is set to ON by mechanical means, the high temperature and high pressure liquid incoming from one of the ports is able to flow into one of the remaining two ports along only one of the two pipelines and to be converted into a low temperature and low pressure liquid in the throttling apparatus. Such a mechanical multifunctional conversion device is free of complicated electrical circuit connections and a complex programmed control which are common in controlling one channel to ON while the other channel to OFF by means of an electrical circuit. Moreover, electrical circuit control is difficult to maintain, and therefore the present invention has a rational construction and is easy for use.

The present invention will be further described in more detail below by referring to Figures and specific embodiments.

### BRIEF DESCRIPTION OF DRAWINGS

Figure 1 is a connection relationship diagram of an example of the present invention;

Figure 2 is a flow graph of an example of the present invention operating in a cold air (or chilled water) mode;

Figure 3 is a flow graph of an example of the present invention operating in a warm air mode;

Figure 4 is a flow graph of an example of the present invention operating in a hot-water producing mode; and

Figure 5 is a flow graph of an example of the present invention operating in a simultaneous cold air and hot-water producing mode.

### DETAILED EMBODIMENS

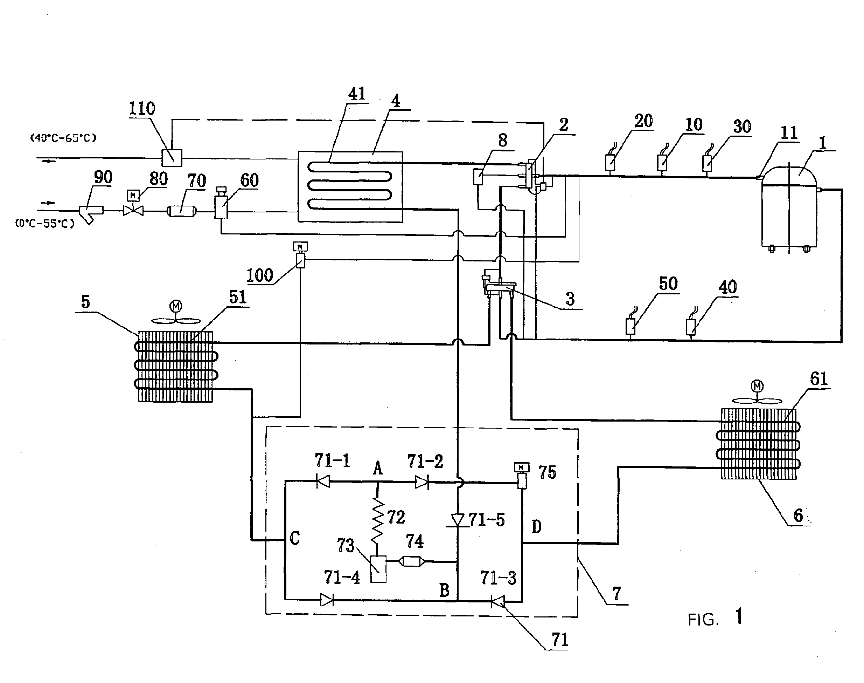

The present invention is a multifunctional air-conditioning and hot-water system. As illustrated in Figure 1, the multifunctional air-conditioning and hot-water system comprises a compressor 1, a special three-way valve 2, a four-way valve 3, a water-heat exchanger 4, an outdoor heat exchanger 5, an indoor heat exchanger 6, a multifunctional throttling channel conversion device 7 and a pressure relief device 8, wherein a water inlet and a water outlet of the water-heat exchanger 4 are connected with an outside cold-water supply end and an outside hot-water receiving end respectively; an inlet of the special three-way valve 2 is connected with a gas outlet of the compressor 1, one outlet of the special three-way valve 2 is connected with an inlet of a heat-exchange pipeline 41 of the water-heat exchanger 4, the other outlet of the special three-way valve 2 is connected with an inlet of the four-way valve 3, and an additional channel of the special three-way valve 2 is connected with an inlet of the pressure relief device 8; a water output controller 110 interlocked with the special three-way valve 2 is disposed at the hot-water outlet end of the water-heat exchanger 4; three outlets of the four-way valve 3 are connected with one end of a heat-exchange pipeline 51 of the outdoor heat exchanger 5, one end of a heat-exchange pipeline 61 of the indoor heat exchanger 6 and a return gas inlet of the compressor 1 respectively; an outlet of the heat-exchange pipeline 41 of the water-heat exchanger 4, the other end of the heat-exchange pipeline 51 of the outdoor heat exchanger 5 and the other end of the heat-exchange pipeline 61 of the indoor heat exchanger 6 are connected with three ports of the multifunctional throttling channel conversion device 7 respectively; an outlet of the pressure relief device 8 leads to the return gas inlet of the compressor 1. Therefore, it can be ensured that during the conversion of the system the pressures therein are kept balanced with a rapid conversion speed. The residual high pressure produced during the conversion of the system can be relieved to a low pressure end rapidly through the pressure relief device to achieve fast and flexible conversion of the system, and to make the operation of the system stable and balanced. Therefore, the system has sufficient safety precautions and an improved lifetime. The function of the multifunctional throttling channel conversion device 7 is to convert the high temperature and high pressure refrigerant liquid into a low temperature and low pressure refrigerant liquid after flowing through the multifunctional throttling channel conversion device and then deliver the converted liquid to a corresponding heat exchanger to evaporate. Since the multifunctional throttling channel conversion device is a mechanical structure and each port of which connects with two pipelines, and one of the two pipelines is set to OFF by mechanical means (or by high pressure) while the other pipeline is set to ON by mechanical means, the high temperature and high pressure liquid incoming from one of the ports is able to flow into one of the remaining two ports along only one of the two pipelines and to be converted into a low temperature and low pressure liquid in the throttling apparatus. Such a mechanical multifunctional conversion device is free of complicated electrical circuit connections and a complex programmed control which are common in controlling one channel to ON while the other channel to OFF by means of an electrical circuit. Moreover, electrical circuit control is difficult to maintain, and therefore the present invention has a rational construction and is easy for use.

Since the present invention performs cycling of a heat pump by a certain special three-way valve and a four-way valve as well as a multifunctional throttling channel conversion device and performs heat exchanging with one, two or three of a water-heat exchanger, an outdoor heat exchanger, and an indoor heat exchanger during the whole cycling, one of six processes can be implemented, including cooling solely, heating solely, producing hot-water solely, producing hot-water while cooling, producing hot-water preferentially in a heating mode, and producing chilled water together with hot-water. It can be seen that, the present invention can realize six functions with simply system connections and a simple control. Therefore, the present invention can provide a multifunctional system which has a rational construction and can also meet the requirements for saving energy and reducing emission so as to satisfy lots of different needs.

In the present example, a condensing pressure adjusting valve 60 is disposed at the water inlet of the water-heat exchanger 4, and the opening degree of the condensing pressure adjusting valve 60 is controlled by high pressure gas at the gas outlet of the compressor 1 in order to keep the temperature of the output water constant. Moreover, in operation, amount of incoming water can be adjusted in accordance with changes in high pressure (condensing pressure) and flow rate of cold-water can be controlled to achieve stabilized temperature of the output water.

It can be seen that, the special three-way valve 2 of the present invention is a special designed three-way valve that, in addition to three channels, also contains a high pressure relief channel composed of the pressure relief device 8. Moreover, the special three-way valve 2 is interlocked with the water output controller 110 so that the channels can be automatically switched when the hot-water is used in cold air mode and warm air mode.

In the multifunctional throttling channel conversion device, the high pressure and high temperature refrigerant liquid after condensation in each working condition is converted through a channel and then flows into a same throttling apparatus to be throttled. The low pressure and low temperature refrigerant liquid after being throttled is converted through another channel and delivered to a corresponding heat exchanger to evaporate. In the present example, as illustrated in Figure 1, the multifunctional throttling channel conversion device 7 comprises five check valves 71 and a throttling apparatus 72, wherein four check valves 71 (which are 71-1, 71-2, 71-3, and 71-4 respectively) are bridged into bridge channels (similar to a bridge rectifier circuit), two diagonal points C, D of the bridge channels (corresponding to AC inputs of the bridge rectifier circuit) are connected with the other end of the heat-exchange pipeline 51 of the outdoor heat exchanger 5 and the other end of the heat-exchange pipeline 61 of the indoor heat exchanger 6 respectively, the throttling apparatus 72 is connected between the other two points A, B of the bridge channels (corresponding to outputs of the bridge rectifier circuit); the remaining one check valve 71-5 is connected between the outlet of the heat-exchange pipeline 41 of the water-heat exchanger 4 and two opposite check valves 71-4, 71-3 of the bridge channels (i.e., point D). Connections of the bridge channels of the four check valves are similar to that of the bridge rectifier circuit. When being connected, firstly, each two check valves in a same direction of the four check valves are connected in series respectively to form two sets of check valves (as illustrated in Figure 1, check valves 71-4 and 71-1 form one set, and check valves 71-2 and 71-3 form the other set). Secondly, the two sets of check valves are connected in parallel. Then, the throttling apparatus 72 is connected in parallel between the parallel ends A, B of the two sets (corresponding to the outputs of the bridge rectifier circuit). Moreover, points C, D between the two check valves in each set are connected with the other ends of the heat-exchange pipelines 51, 61 of the outdoor and indoor heat exchangers 5, 6 respectively. With the bridge channels of the four check valves 71, one of the two pipelines at each port of the multifunctional throttling channel conversion device 7 is OFF while the other pipeline is ON. The function of the throttling apparatus 72 is to convert the high temperature and high pressure liquid into a low temperature and low pressure liquid, and the throttling apparatus 72 may be an electronic expansion valve, a capillary tube and so on. In order to be relatively stable during functional conversion and protect the throttling apparatus, in the present example, the multifunctional throttling channel conversion device 7 further comprises a liquid storage 73 and a filter 74, which are disposed between an inlet of the throttling apparatus 72 and the two opposite check valves 71-3, 71-4 of the bridge channels. In addition, the multifunctional throttling channel conversion device 7 may further comprise a chilled water electromagnetic valve 75, which is disposed on a channel of check valve 71 of the bridge channels, and the channel of the check valve 71 is directed to the indoor heat exchanger. The chilled water electromagnetic valve 75 is only installed when producing chilled water together with hot-water.

The pressure relief device 8 may be a pressure relief valve, such as a 10 KG pressure relief valve. When the system is converting and the gas pressure at the original high pressure end in the special three-way valve 2 exceeds 10KG, the high pressure gas returns to the low pressure end rapidly via the pressure relief valve. The pressure relief device 8 may also be comprised of a pressure switch and an electromagnetic valve, and when the system is converting, the pressure switch acts and the electromagnetic valve is open to relieve the pressure.

To improve the safety protection for the system, a blower speed-adjusting control switch 10, a high pressure bypass switch 20 and a high pressure protection switch 30 are disposed at the high pressure end of the system to realize an over pressure protection. A low pressure bypass switch 40 and a low pressure protection switch 50 are disposed at the low pressure end of the system to realize a low pressure protection. Also, an unitary pipeline for both high pressure bypass and defrost bypass and a high pressure bypass and defrost electromagnetic valve 100 are disposed in the system, whether the unitary pipeline and the high pressure bypass and defrost electromagnetic valve 100 operate or not is controlled by the high pressure bypass switch 20 and the low pressure bypass valve 40.

The processes to realize the six functions of the present invention are now described below respectively:

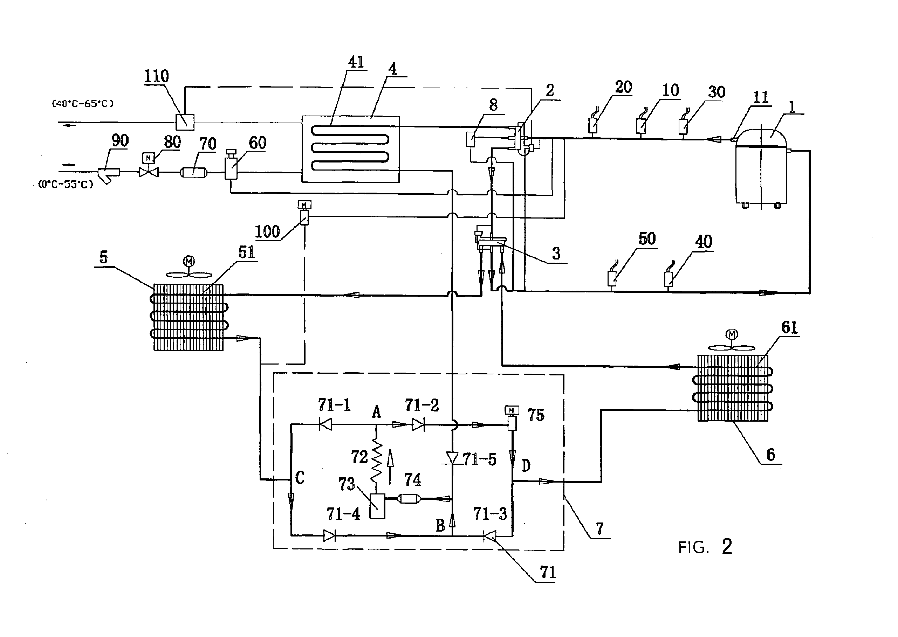

When the present invention is used for cooling solely, as indicated by the directions of the fluid arrows in Figure 2, the high temperature and high pressure refrigerant vapor from the compressor 1 enters into the outdoor heat exchanger 5 through the special three-way valve 2 and the four-way valve 3 for condensation. Then the high temperature and high pressure liquid after condensation flows into the multifunctional throttling channel conversion device 7 and into the throttling apparatus 72 along the check valve 71-4, a filter 74 and the liquid storage 73 for throttling. At this time, the check valve 71-1 is at a high back pressure and therefore cannot be opened. The throttled low pressure and low temperature liquid flows into the indoor heat exchanger 6 through the check valve 71-2 to evaporate by absorbing heat from the air that passes through the indoor heat exchanger 6. Later, low temperature air is delivered into the indoor space through a blower on the heat exchanger to realize a working condition of cooling. The evaporated low temperature and low pressure refrigerant gas enters the compressor 1 through the four-way valve 3 and is to be compressed to a high temperature and high pressure refrigerant gas for the next cycle.

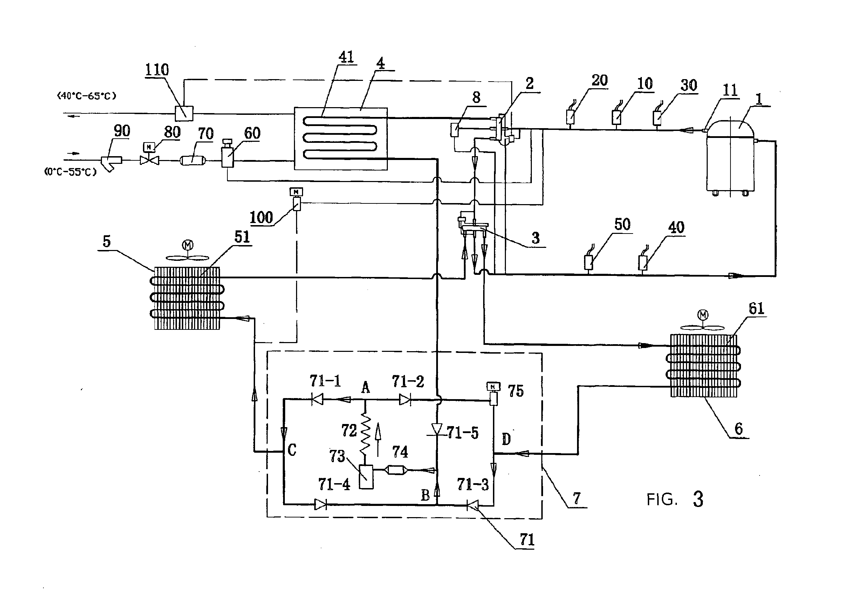

When the present invention is used for heating solely, as indicated by the directions of the fluid arrows in Figure 3, the high temperature and high pressure refrigerant vapor from the compressor 1 enters into the indoor heat exchanger 6 through the special three-way valve 2 and the four-way valve 3 for condensation. Then the temperature of the air that passes through the indoor heat exchanger 6 increases by absorbing condensation heat, and the heated air is delivered into the indoor space through the blower to realize a working condition of heating. The high temperature and high pressure liquid after condensation flows into the multifunctional throttling channel conversion device 7 and into the throttling apparatus 72 along the check valve 71-3, the filter 74 and the liquid storage 73 for throttling. At this time, the check valve 71-2 is at a high back pressure and therefore cannot be opened. The throttled low pressure and low temperature liquid flows into the outdoor heat exchanger 5 through the check valve 71-1 to evaporate. Later, the evaporated low temperature and low pressure gas enters the compressor 1 through the four-way valve 3 and is to be compressed to a high temperature and high pressure refrigerant gas for the next cycle.

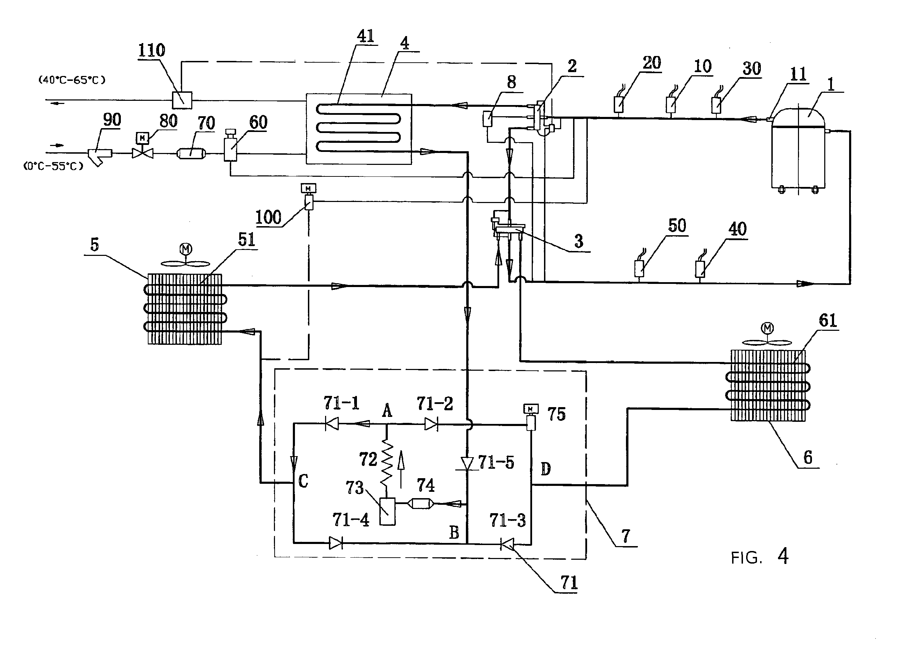

When the present invention is used for producing hot-water solely, as indicated by the directions of the fluid arrows in Figure 4, the high temperature and high pressure refrigerant vapor from the compressor 1 enters into the water-heat exchanger 4 through the special three-way valve 2 for condensation. Then the condensation heat is carried away by cold-water entering into the water-heat exchanger 4 so as to produce hot-water as required for supplying a user. The high temperature and high pressure liquid after condensation flows into the multifunctional throttling channel conversion device 7 and into the throttling apparatus 72 along the check valve 71-5, the filter 74 and the liquid storage 73 for throttling. At this time, there is no flowing liquid in the pipelines of the indoor heat exchanger 6 and the check valve 71-3 is at a high back pressure and therefore cannot be opened, and the check valve 71-2 is not open as well. The throttled low pressure and low temperature liquid flows into the outdoor heat exchanger 5 through the check valve 71-1 to evaporate. Later, the evaporated low temperature and low pressure gas enters the compressor 1 through the four-way valve 3 and is to be compressed to a high temperature and high pressure refrigerant gas for the next cycle.

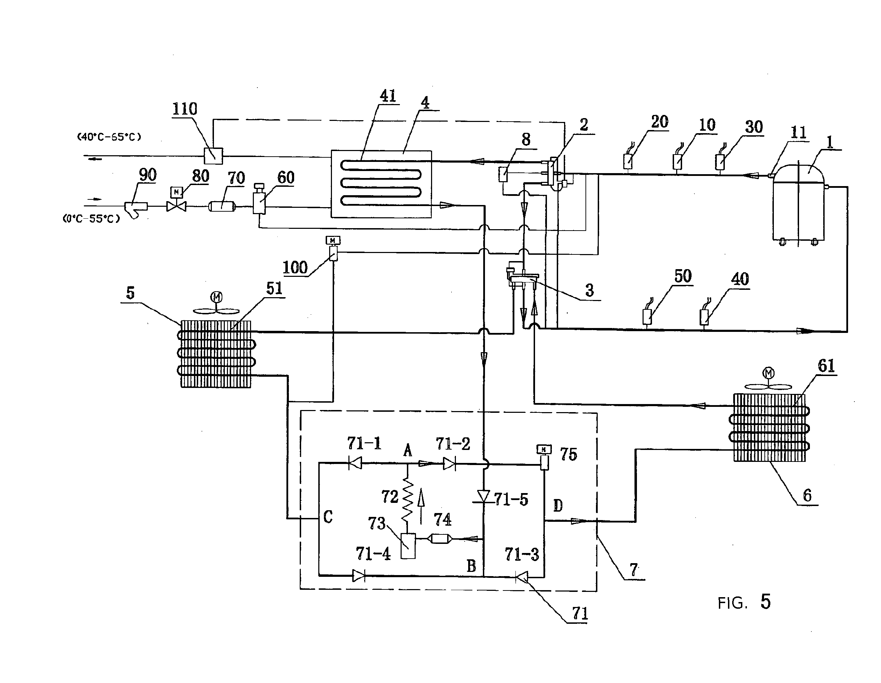

When the present invention is used for producing hot-water while cooling, as indicated by the directions of the fluid arrows in Figure 5, the high temperature and high pressure refrigerant vapor from the compressor 1 enters into the water-heat exchanger 4 through the special three-way valve 2 for condensation. Then the condensation heat is carried away by cold-water entering into the water-heat exchanger 4 so as to produce hot-water as required for supplying a user. The high temperature and high pressure liquid flows after condensation into the multifunctional throttling channel conversion device 7 and into the throttling apparatus 72 along the check valve 71-5, the filter 74 and the liquid storage 73 for throttling. At this time, there is no flowing liquid in the pipelines of the outdoor heat exchanger 5 and the check valve 71-4 is at a high back pressure and therefore cannot be opened, and the check valve 71-1 is not open as well. The throttled low pressure and low temperature liquid flows into the indoor heat exchanger 6 through the check valve 71-2 to evaporate by absorbing heat from the air that passes through the indoor heat exchanger 6. Later, the low temperature air is delivered into the indoor space through the blower on the heat exchanger to realize a working condition of cooling. The evaporated low temperature and low pressure refrigerant gas enters the compressor 1 through the four-way valve 3 and is to be compressed to a high temperature and high pressure refrigerant gas for the next cycle.

When the present invention is used for producing hot-water preferentially in a heating mode, a water output controller 110 interlocked with the special three-way valve 2 is disposed at the hot-water outlet end of the water-heat exchanger 4. Therefore, in the heating mode (as shown in Figure 3), if a user wants to use hot-water, he/she only needs to switch on the water output controller 110. Then the special three-way valve 2 will immediately switch into the sole hot-water producing mode as shown in Figure 4. After using the hot-water, the user switch off the water output controller 110. Then the special three-way valve 2 immediately switches into the sole heating mode automatically and the present invention operates in the heating mode as shown in Figure 3.

The present invention may produce hot-water in a heat recovery way while producing chilled water, that is to say, in the cooling mode, as shown in Figure 5, the indoor heat exchanger 6 produces chilled water (temperature of which is under 10) while the water-heat exchanger 4 produces hot-water. When the temperature of chilled water reaches a set value, the working condition of cooling stops, at this time, if there is still a need for producing hot-water, the four-way valve 3 immediately switches into the sole hot-water producing mode as shown in Figure 4. If the temperature of the chilled water increases and there is a need for producing chilled water again, the four-way valve 3 immediately switches into the mode in Figure 5. When the mode is switched from producing chilled water to producing hot-water solely, in order to prevent the low temperature and low pressure refrigerant liquid from leaking into the indoor heat exchanger 6 through the check valve 71-2, under this circumstance, a chilled water electromagnetic valve 75 is installed in the multifunctional throttling channel conversion device 7 to effectively prevent the throttled refrigerant from leaking into the indoor heat exchanger 6. The chilled water electromagnetic valve 75 is open in the chilled water producing mode while closed in the sole hot-water producing mode.

Further, a magnetizer 70, an electromagnetic valve 80 and a Y-filter 90 are installed on the water inlet of the water-heat exchanger 4.

## Claims

1. A multifunctional air-conditioning and hot-water system, **characterized in that**, the multifunctional air-conditioning and hot-water system comprises a compressor (1), a special three-way valve (2), a four-way valve (3), a water-heat exchanger (4), an outdoor heat exchanger (5), an indoor heat exchanger (6), a multifunctional throttling channel conversion device (7) and a pressure relief device (8), wherein
a water inlet and a water outlet of the water-heat exchanger (4) are connected with an outside cold-water supply end and an outside hot-water receiving end respectively;
an inlet of the special three-way valve (2) is connected with a gas outlet of the compressor (1), one outlet of the special three-way valve (2) is connected with an inlet of a heat-exchange pipeline (41) of the water-heat exchanger (4), the other outlet of the special three-way valve (2) is connected with an inlet of the four-way valve (3), and an additional channel of the special three-way valve (2) is connected with an inlet of the pressure relief device (8); a water output controller (110) interlocked with the special three-way valve (2) is disposed at the hot-water outlet end of the water-heat exchanger (4);
three outlets of the four-way valve (3) are connected with one end of a heat-exchange pipeline (51) of the outdoor heat exchanger (5), one end of a heat-exchange pipeline (61) of the indoor heat exchanger (6) and a return gas inlet of the compressor (1) respectively;
an outlet of the heat-exchange pipeline (41) of the water-heat exchanger (4), the other end of the heat-exchange pipeline (51) of the outdoor heat exchanger (5) and the other end of the heat-exchange pipeline (61) of the indoor heat exchanger (6) are connected with three ports of the multifunctional throttling channel conversion device (7) respectively;
an outlet of the pressure relief device (8) leads to the return gas inlet of the compressor (1).

2. The multifunctional air-conditioning and hot-water system of claim 1, **characterized in that**, the multifunctional throttling channel conversion device (7) comprises five check valves (71) and a throttling apparatus (72), wherein four check valves (71-1, 71-2, 71-3, 71-4) are bridged into bridge channels, two diagonal points (C, D) of the bridge channels are connected with the other end of the heat-exchange pipeline (51) of the outdoor heat exchanger (5) and the other end of the heat-exchange pipeline (61) of the indoor heat exchanger (6) respectively, the throttling apparatus (72) is connected between the other two points (A, B) of the bridge channels; the remaining one check valve (71-5) is connected between the outlet of the heat-exchange pipeline (41) of the water-heat exchanger (4) and two opposite check valves (71-4, 71-3) of the bridge channels.

3. The multifunctional air-conditioning and hot-water system of claim 2, **characterized in that**, the multifunctional throttling channel conversion device (7) further comprises a liquid storage (73) and a filter (74), the liquid storage (73) and the filter (74) are disposed between an inlet of the throttling apparatus (72) and the two opposite check valves (71-3, 71-4) of the bridge channels.

4. The multifunctional air-conditioning and hot-water system of claim 3, **characterized in that**, the multifunctional throttling channel conversion device (7) further comprises a chilled water electromagnetic valve (75); the chilled water electromagnetic valve (75) is disposed on a channel of check valve (71-2) of the bridge channels, wherein the channel of the check valve (71-2) is directed to the indoor heat exchanger.

5. The multifunctional air-conditioning and hot-water system of claim 1, 2, 3 or 4, **characterized in that**, a condensing pressure adjusting valve (60) is disposed at the water inlet of the water-heat exchanger (4), and the opening degree of the condensing pressure adjusting valve (60) is controlled by high pressure gas at the gas outlet of the compressor (1).
